# NEUE EUROPÄISCHE PATENTSCHRIFT

(11) **EP 1 243 874 B2**
(45) Veröffentlichungstag und Bekanntmachung des Hinweises auf die Entscheidung über den Einspruch: **28.10.2009**
(45) Hinweis auf die Patenterteilung: 31.05.2006
(21) Anmeldenummer: 02005085.2
(22) Anmeldetag: 07.03.2002
(51) Int. Cl.: F24J 2/52, F24J 2/46

(54) **Sonnenkollektor und Absorberhalter**
Solar collector and absorber support
Collecteur solaire et support d'absorbeur

(30) Priorität: 23.03.2001 DE 20105162 U
(43) Veröffentlichungstag der Anmeldung: 25.09.2002
(73) Patentinhaber: SCHÜCO International KG, 33609 Bielefeld (DE)
(72) Erfinder: Brand, Holger, 49587 Fürstenau (DE)
(74) Vertreter: Specht, Peter

(56) Entgegenhaltungen:
- DE-A- 19 752 594
- DE-A- 19 904 646
- JP-A- 02 233 943
- JP-A- 03 005 670
- US-A- 4 201 190
- US-A- 4 214 575
- US-A- 4 341 200

## Beschreibung

Die Erfindung betrifft einen Sonnenkollektor.

Ein erster Sonnenkollektor bzw. ein Solarkollektor ist aus der DE 199 15 504 A1 bekannt. Der Aufbau dieses Sonnenkollektors hat sich an sich bewährt. In der Montagestellung wird die obere Abdeckung zur Sonne hin gerichtet. Darunter liegen der Absorber, das Wärmedämmaterial und der der Sonneneinstrahlung abgewandte Boden bzw. die untere Abdeckung.

Weiterhin ist aus der US 4,201,190 ein Solarkollektor bekannt. Es wird ein Absorberhalter beschrieben, mittels dessen der Absorber mechanisch mit dem Solarkollektor verbunden wird.

Aus dem Stand der Technik ist es bekannt, die Absorbermontage einfach dadurch zu bewerkstelligen, daß die Absorber in den Rahmen oder ein sonstiges Gehäuse eingelegt werden. Teilweise werden hierbei die Absorber durch die Verbindung der Absorberrohrleitungen gehalten, teilweise ist es auch üblich, die Absorber mehr oder weniger formschlüssig in das Dämmaterial einzubetten.

Es ist ebenfalls bekannt, Absorberbleche in Nuten zu klemmen oder starr an der Außenwand des Kollektors zu befestigen.

Nachteilig an den bekannten Montagearten für Absorber ist es, daß der Absorber z.B. beim Transport oder bei der Montage verrutschen kann.

Nach einer Erkenntnis der Erfindung ist es ferner nachteilig, den Absorber starr im Kollektorgehäuse oder am Kollektorrahmen zu montieren, da eine starre Befestigung nicht die erforderliche thermische Beweglichkeit gewährleistet, welche bei größeren Wärmeschwankungen erforderlich ist, um Spannungen und Beschädigungen der Absorberfläche zu vermeiden.

Gerade die bekannten Montagearten, welche eine starre Befestigung des Absorbers im Sonnenkollektor lehren, bringen zudem den Nachteil mit sich, daß die Montage des Absorbers relativ umständlich und zeitaufwendig ist, da z. B. wie in der US 4,201,190 zusätzliche Werkzeuge zum Befestigen von Schraubverbindungen erforderlich sind.

Es ist daher die Aufgabe der Erfindung, den gattungsgemäßen Sonnenkollektor dahingehend weiterzuentwickeln, daß die Montage des Absorbers im Sonnenkollektor auf konstruktiv einfache Weise ermöglicht wird. Vorzugsweise soll der Absorber dabei gegen ein Verrutschen gesichert sein und es soll ein freies Ausdehnen bei thermischen Veränderungen möglich sein.

Die Erfindung löst diese Aufgabe durch den Gegenstand des Anspruches 1. Das Federelement gewährleistet auf konstruktiv einfache Weise eine unkomplizierte Montage und die nötige thermische Beweglichkeit der Absorberhalterung, was Spannungen und Beschädigungen der Absorberbleche vermeidet.

Nach der Erfindung weist der Absorberhalter zudem an seinem dem Absorber zugewandten Ende einen Halteschenkel zum Umgreifen des Absorberrandes oder zum Eingriff in eine Ausnehmung des Absorbers auf. Insbesondere hat es sich bewährt, wenn der Halteschenkel zum Eingriff in das axiale Ende eines am Absorber angeordneten Rohres ausgelegt ist, welches mit seinem freien Ende zum Kollektorrahmen zeigt.

Bevorzugt ist dazu der Absorberhalter dazu ausgelegt, den Absorber relativ zum übrigen Kollektor federnd einzufassen.

Nach Erfindung ist der Absorberhalter weiterhin an der unteren Abdeckung, verschwenkbar gelagert, so daß einfach durch das Verschwenken des Absorberhalters eine Fixierung des Absorbers im Sonnenkollektor erzielbar ist.

Eine umständliche Montage mit Schrauben oder sonstigen Befestigungselementen wird auf diese Weise vermieden und die Montage wird deutlich vereinfacht.

Nach einer weiteren besonders bevorzugten Variante der Erfindung ist vorgesehen, den Absorberhalter als Drahtbügel auszubilden, welcher mit einem seiner freien Enden verschwenkbar in Aufnahmen in der unteren Abdeckung einhängbar ist. Die Ausbildung des Absorberhalters als Drahtbügel läßt sich besonders kostengünstig realisieren. Es bietet sich beispielsweise an, den Drahtbügel aus Federstahldraht zu fertigen.

Zudem kann ein Draht relativ einfach in Aufnahmen der unteren Abdeckung, z.B. Laschen oder Ösen, drehbar gelagert werden. Eine Fixierung läßt sich auf einfache Weise durch eine Abkröpfung des Drahtbügels erreichen.

Es ist ferner möglich, eine Auslegung des Absorberhalters als Drahtbügel und ein freies Ende des Drahtbügels dazu zu nutzen, eine federnde Vorspannung zwischen dem Absorber und der Kollektorwandung bzw. dem Kollektorrahmen zu erzielen.

Besonders bevorzugt wird der Bügeldraht des Drahtbügels wie folgt ausgebildet:
- der Drahtbügel weist in einer ersten Ansicht im wesentlichen eine Art L-Form auf,
- wobei der kürzere Schenkel des L verschwenkbar an der unteren Abdeckung gelagert ist,
- wobei ferner der längere Schenkel des L wiederum zu einer Art U gebogen ist und der Grundbereich des U-Schenkels derartig zum übrigen Schenkel abgebogen ist, daß er als Halteschenkel mit dem Absorber in Eingriff steht,
- wobei der freie Schenkel des U das sich am Kollektorrahmen abstützende Federelement ausbildet.

Mit dieser Variante der Erfindung wird auf kostengünstige Weise sowohl die Verschwenkbarkeit des Absorberhalters als auch die federnde Abstützung am übrigen Sonnenkollektor realisierbar.

Nachfolgend wird die Erfindung anhand von Ausführungsbeispielen unter Bezug auf die Zeichnung näher beschrieben.

Es zeigt:
- Figur 1: einen Schnitt eines Randbereiches eines Sonnenkollektors;
- Figur 2: eine perspektivische Ansicht eines Ausschnitts aus Figur 1 und
- Figur 3: eine Seitenansicht eines Absorberhalters.

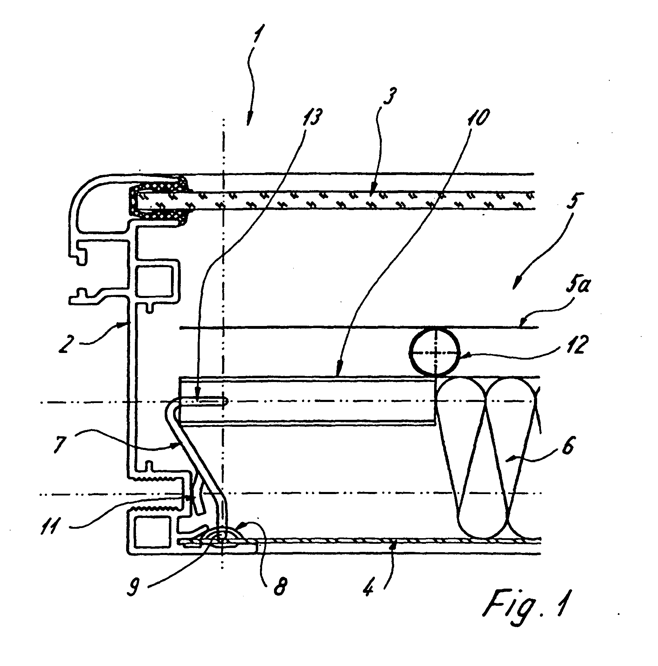

Die Figur 1 zeigt einen Sonnenkollektor 1 mit einem Gehäuse, welches hier aus einem Rahmen mit Rahmenprofilen 2 gebildet wird, welche dem Sonnenkollektor an seinen Außenseiten einfassen.

Das Rahmenprofil hält eine obere, der Sonne entgegengerichtete Abdeckung - in der Regel eine Glasscheibe 3 - eine untere Abdeckung - in der Regel ein Blech 4.

Im Inneren des Sonnenkollektors ist der eigentliche Absorber angeordnet, welcher über einer Dämmschicht 6 liegt, welche wiederum auf dem Blech 4 angeordnet ist.

Der Absorber weist hier ein Absorberblech 5a sowie Rohre 12 zur Wasserleitung auf. Alternativ ist es auch möglich, den Absorber mit Leitblechen für einen Warmluftkollektor zu versehen.

Im Randbereich zwischen dem Absorber 5 und dem Rahmenprofil 2 liegt unterhalb des Absorberbleches 5a ein Rohrstück 10. Das Rohr ist im wesentlichen senkrecht zur Haupterstreckung des Rahmenprofils 2 ausgebildet. In das freie Ende des Rohres 10, welches zum Rahmenprofil 2 hin zeigt, greift ein Absorberhalter 7 ein, der hier als Drahtbügel aus Federstahldraht ausgebildet ist.

Der Drahtbügel greift im unteren Bereich in eine Lasche 8 des Bodenbleches 4 ein. Laschen 8 im Bodenblech 4 lassen sich auf einfache Weise durch Stanzen ausbilden. Dabei ist es vorteilhaft, daß sich die Laschen 8 noch oberhalb des Rahmenprofils 2 ausbilden lassen, so daß die Stanzungen für die Laschen 8 von außen nicht sichtbar sind und nicht zu Undichtigkeiten führen.

Der Drahtbügel weist an einem seiner Enden einen Schenkel auf, der als Drehachse 9 durch die Bodenblechlasche 8 geführt ist. Direkt hinter der Bodenblechlasche 8 ist der Drahtbügel nach oben hin abgebogen und erstreckt sich in der Arretierstellung für den Absorber bis zum Absorber, in welches er mit einem Halteschenkel 13 eingreift, welcher durch einen U-förmig gebogenen Abschnitt des Drahtbügels ausgebildet wird. Mittels eines Federelements des Schenkels, welches aus dem Rohr 10 vorsteht, ist der Halter 7 zudem federnd am Rahmenprofil 2 abgestützt.

Durch die Drehachse 9 ist der Halter 7 am Boden 4 verschwenkbar gelagert, d.h. er kann zur Seite gekippt werden, um den Absorber 5 in den Sonnenkollektor 1 einzusetzen. Sodann wird der Absorberhalter 1 bzw. werden vorteilhafterweise zwei Absorberhalter 7 auf einander gegenüberliegenden Seiten des Absorbers 5 in die Arretierstellung verschwenkt, in welcher die Halteschenkel der drahtbügelartigen Absorberhalter 7 jeweils in die freien Enden der Rohre 10 eingreifen. Hierdurch wird der Absorber 5 auf einfache Weise im Sonnenkollektor fixiert, wobei das am Kollektorrahmen 2 abgestützte Federelement 11 auf einfache Weise den Ausgleich von Materialdehnungen bei Temperaturschwankungen ermöglicht.

Alternativ kann der Halteschenkel 13 auch derart ausgebildet sein, daß er das Absorberblech 5a z.B. U-förmig am Rand umgreift (hier nicht dargestellt).

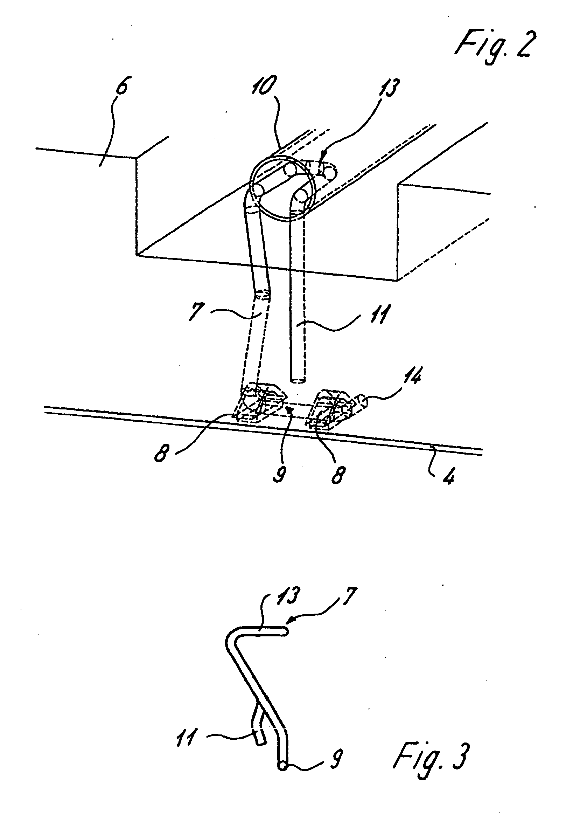

Figur 2 zeigt einen Teilausschnitt aus Figur 1 in isometrischer Darstellung. Besonders gut erkennbar ist der Eingriff des Absorberhalters 7 mittels der Drehachse 9 in die Lasche 8 des Bodenbleches 4. Angedeutet zu erkennen sind die Isolierung 6 und das freie Ende des Rohres 10, in welches der Absorberhalter bzw. der Halteschenkel 13 des Absorberhalters eingreift.

Ein gekröpftes Ende 14 am Ende des die Drehachse 9 bildenden Schenkels des Drahtbügels verhindert das Herausgleiten des Halters 7 in der Montagestellung.

Angemerkt werden soll noch, daß das Federelement 11 entweder durch einen geraden Schenkel gemäß der Darstellung der Figur 3 als auch durch eine gekröpfte Ausbildung oder durch ein anderweitiges Federelement (z.B. eine Spiralfeder) ausgebildet werden kann.

Abschließend sei erwähnt, daß es auch denkbar ist, den Kollektorhalter als in der Seitenansicht im wesentlichen Z-förmiges Blech auszubilden, wobei ein Schenkel des Z am Bodenblech befestigt ist und wobei der weitere Schenkel des Z in ein freies Rohrende des Rohres 10 eingreift (hier nicht dargestellt). Wichtig ist dabei, daß dieser Z-förmige Halter mittels eines Federschenkels am Sonnenkollektor abgestützt ist, wobei die Federwirkung ferner derart ausgelegt sein soll, daß zum Montieren des Absorbers 5 ein genügend weites Zurückklappen des Absorberhalters 7 möglich ist. Angemerkt werden soll noch, daß es auch möglich ist, den Absorberhalter anstelle von korrosionsfreiem Federstahl z.B. aus Kunststoff oder einem sonstigen Material herzustellen, welches die geforderten Federeigenschaften aufweist.

### Bezugszeichenliste

- 1: Sonnenkollektor
- 2: Rahmenprofil
- 3: Glasscheibe
- 4: Blech
- 5: Absorber
- 5a: Absorberblech
- 6: Dämmschicht
- 7: Halter
- 8: Bodenblechlasche
- 9: Drehachse
- 10: Rohr
- 11: Federelement
- 12:
- 13: Halteschenkel
- 14: Ende

## Patentansprüche

1. Sonnenkollektor mit einem Rahmen, vorzugsweise aus Rahmenprofilen (2), sowie mit einer unteren Abdeckung - insbesondere einem Blech (4) - sowie mit einer oberen Abdeckung - insbesondere einer Scheibe (3) - und mit einem Absorber (5), der zumindest ein Absorberblech (5a) aufweist und der vorzugsweise über einer Deckschicht (6) zwischen der unteren und der oberen Abdeckung angeordnet ist, wobei der Absorber (5) mittels eines ein Federelement (11) aufweisenden Absorberhalters (7) am Sonnenkollektor befestigt ist, wobei der Absorberhalter an der unteren Abdeckung (4) des Sonnenkollektors verschwenkbar gelagert ist und wobei der Absorberhalter (7) an seinem von der unteren Abdeckung (4) abgewandten Ende einen Halteschenkel (13) zum Umgreifen des Absorberrandes oder zum Eingriff in eine Ausnehmung des Absorbers (5) aufweist, wobei das Federelement ein Federsteg ist, der sich am Rahmen des Absorbers abstützt.

2. Sonnenkollektor nach einem der vorstehenden Ansprüche, **dadurch gekennzeichnet, daß** der Halteschenkel (13) zum Eingriff in das axiale freie Ende eines am Absorber (5) angeordneten Rohres (10) ausgelegt ist.

3. Sonnenkollektor nach einem der vorstehenden Ansprüche, **dadurch gekennzeichnet, daß** der Absorberhalter (7) als Drahtbügel ausgebildet ist, welcher mit einem seiner Enden (Drehachse 9) verschwenkbar in Aufnahmen (8) in der unteren Abdeckung einhängbar ist.

4. Sonnenkollektor nach Anspruch 3, **dadurch gekennzeichnet, daß** der Drahtbügel aus einem rostfreien Federstahl besteht.

5. Sonnenkollektor nach einem der vorstehenden Ansprüche, **dadurch gekennzeichnet, daß** die Aufnahmen im Bodenblech als Ausstanzungen (8) im Bodenblech (4) oder an die untere Abdeckung angesetzte Ösen ausgebildet sind.

6. Sonnenkollektor nach Anspruch 3 oder 4, **dadurch gekennzeichnet, daß** der Drahtbügel in einer ersten Ansicht im wesentlichen eine Art L-Form aufweist, wobei der kürzere Schenkel des L verschwenkbar an der unteren Abdeckung (4) gelagert ist und wobei der längere Schenkel des L wiederum zu einer Art U umgebogen ist, wobei der Grundbereich des U als Halteschenkel (13) zum Eingriff in den Absorber (5) ausgebildet ist und wobei ein freier Schenkel des Drahtbügels das sich am Kollektorrahmen (2) abstützende Federelement ausbildet.

7. Sonnenkollektor nach Anspruch 3, 4 oder 6, **dadurch gekennzeichnet, daß** der die Drehachse (9) ausbildende Schenkel des Absorberhalters mit einer Abkröpfung (14) versehen ist, welche den Drahtbügel am unteren Absorberblech (4) hält/fixiert.

8. Sonnenkollektor nach einem der vorstehenden Ansprüche, **dadurch gekennzeichnet, daß** an der unteren Abdeckung (4) eine Mehrzahl der Absorberhalter (7) gelagert ist.

9. Sonnenkollektor nach einem der vorstehenden Ansprüche, **dadurch gekennzeichnet, daß** der Absorber (5) mittels zwei an zwei einander gegenüberliegenden Seiten angeordneten Absorberhaltem (7) am Sonnenkollektor (1) fixiert ist.

10. Sonnenkollektor nach einem der vorstehenden Ansprüche, **dadurch gekennzeichnet, daß** der Absorberhalter als im wesentlichen Z-förmiges Blech ausgebildet ist.

11. Sonnenkollektor nach einem der Ansprüch 3, 4, 6 oder 7 **dadurch gekennzeichnet, daß** die Aufnahmen zur Aufnahme des Drahtbügels im Boden des Absorberhalters als Ösen im Bodenblech (4) ausgebildet sind, welche vom Rahmenprofil (2) abgedeckt sind.

12. Sonnenkollektor nach einem der vorstehenden Ansprüche, **dadurch gekennzeichnet, daß** der Halteschenkel (13) des Absorberhalters (7) den Rand des Absorberbleches (5a) U-förmig einfaßt.

## Claims

1. Solar collector having a frame, preferably comprising frame profiles (2), and having a lower cover - in particular a plate (4) - and having an upper cover - in particular a panel (3) - and having an absorber (5) which has at least one absorber plate (5a) and which is preferably arranged above an insulating layer (6) between the lower and the upper cover, the absorber (5) being secured to the solar collector by means of an absorber support (7) which has a spring element (11), wherein the absorber support is mounted on the lower cover (4) of the solar collector such that it can pivot, and wherein, at its end which faces away from the lower cover (4), the absorber support (7) has a retaining limb (13) for surrounding the absorber edge or for engaging in a recess in the absorber (5) wherein the spring element is a spring web which is supported on the frame of the absorber.

2. Solar collector according to Claim 1, **characterized in that** the retaining limb (13) is designed to engage in the axial, free end of a tube (10) which is arranged on the absorber (5).

3. Solar collector according to one of the preceding claims, **characterized in that** the absorber support (7) is in the form of a wire bracket which can be suspended by one of its ends (rotation shaft 9) in holding devices (8) in the lower cover such that it can pivot.

4. Solar collector according to Claim 3, **characterized in that** the wire bracket is composed of stainless spring steel.

5. Solar collector according to one of the preceding claims, **characterized in that** the holding devices in the base plate are in the form of punched-out sections (8) in the base plate (4) or lugs attached to the lower cover.

6. Solar collector according to Claim 3 or 4, **characterized in that**, in a first view, the wire bracket essentially has a type of L shape, with the shorter limb of the L being mounted on the lower cover (4) such that it can pivot, and with the longer limb of the L again being bent into a type of U, the base region of the U being in the form of a retaining limb (13) for engaging in the absorber (5), and a free limb of the wire bracket forming the spring element which is supported on the collector frame (2).

7. Solar collector according to Claim 3, 4 or 6, **characterized in that** the limb of the absorber support which forms the rotation shaft (9) is provided with a bent section (14) which retains/fixes the wire bracket on the lower absorber plate (4).

8. Solar collector according to one of the preceding claims, **characterized in that** a multiplicity of absorber supports (7) is mounted on the lower cover (4).

9. Solar collector according to one of the preceding claims, **characterized in that** the absorber (5) is fixed to the solar collector (1) by means of two absorber supports (7) which are arranged on two mutually opposite sides.

10. Solar collector according to one of the preceding claims, **characterized in that** the absorber support is in the form of a substantially Z-shaped plate.

11. Solar collector according to one of Claims 3, 4, 6 or 7, **characterized in that** the holding devices for holding the wire bracket in the base of the absorber support are in the form of lugs in the base plate (4), these lugs being covered by the frame profile (2).

12. Solar collector according to one of the preceding claims, **characterized in that** the retaining limb (13) of the absorber support (7) holds the edge of the absorber plate (5a) in a U-shaped manner.

## Revendications

1. Collecteur solaire, comprenant un châssis, de préférence composé de profilés de châssis (2), ainsi qu'un recouvrement inférieur - en particulier une tôle (4) - ainsi qu'un recouvrement supérieur - en particulier une vitre (3) - et un absorbeur (5) qui présente au moins une tôle d'absorbeur (5a) et qui est de préférence disposé au-dessus d'une couche de protection (6) entre le recouvrement inférieur et le recouvrement supérieur, l'absorbeur (5) étant fixé au collecteur solaire au moyen d'un support d'absorbeur (7) présentant un élément de ressort (11), le support d'absorbeur étant monté de manière pivotante sur le recouvrement inférieur (4) du collecteur solaire et le support d'absorbeur (7) présentant, à son extrémité éloignée du recouvrement inférieur (4), une branche de maintien (13) pour envelopper le bord d'absorbeur ou s'enclencher dans un évidement de l'absorbeur (5), l'élément de ressort étant une barrette à ressort qui s'appuie sur le châssis de l'absorbeur.

2. Collecteur solaire selon l'une quelconque des revendications précédentes, **caractérisé en ce que** la branche de maintien (13) est conçue pour s'enclencher dans l'extrémité libre axiale d'un tuyau (10) disposé au niveau de l'absorbeur (5).

3. Collecteur solaire selon l'une quelconque des revendications précédentes, **caractérisé en ce que** le support d'absorbeur (7) est réalisé comme un étrier en fil métallique qui peut être accroché par l'une de ses extrémités (axe de rotation 9) de façon à pouvoir pivoter dans des logements (8) dans le recouvrement inférieur.

4. Collecteur solaire selon la revendication 3, **caractérisé en ce que** l'étrier en fil métallique se compose d'un acier à ressorts inoxydable.

5. Collecteur solaire selon l'une quelconque des revendications précédentes, **caractérisé en ce que** les logements sont réalisés dans la tôle de fond sous forme de découpes (8) dans la tôle de fond (4) ou sous forme d'oeillets rapportés au recouvrement inférieur.

6. Collecteur solaire selon la revendication 3 ou 4, **caractérisé en ce que** l'étrier en fil métallique présente dans une première vue sensiblement une forme de L, la branche plus courte du L étant montée de manière pivotante sur le recouvrement inférieur (4) et la branche plus longue du L étant à son tour repliée en une sorte de U, la zone de base du U étant réalisée comme une branche de maintien (13) pour s'enclencher dans l'absorbeur (5) et une branche libre de l'étrier en fil métallique réalisant l'élément de ressort s'appuyant sur le châssis de collecteur (2).

7. Collecteur solaire selon la revendication 3, 4 ou 6, **caractérisé en ce que** la branche du support d'absorbeur, réalisant l'axe de rotation (9), est munie d'un coude (14) qui maintient/fixe l'étrier en fil métallique sur la tôle d'absorbeur inférieure (4).

8. Collecteur solaire selon l'une quelconque des revendications précédentes, **caractérisé en ce qu'**une pluralité de supports d'absorbeur (7) est logée au niveau du recouvrement inférieur (4).

9. Collecteur solaire selon l'une quelconque des revendications précédentes, **caractérisé en ce que** l'absorbeur (5) est fixé au collecteur solaire (1) au moyen de deux supports d'absorbeur (7) disposés sur deux côtés mutuellement opposés.

10. Collecteur solaire selon l'une quelconque des revendications précédentes, **caractérisé en ce que** le support d'absorbeur est réalisé sous forme d'une tôle sensiblement de forme de Z.

11. Collecteur solaire selon l'une quelconque des revendications 3, 4, 6 ou 7, **caractérisé en ce que** les logements pour loger l'étrier en fil métallique sont réalisés dans le fond du support d'absorbeur sous forme d'oeillets dans la tôle de fond (4) qui sont recouverts par le profilé de châssis (2).

12. Collecteur solaire selon l'une quelconque des revendications précédentes, **caractérisé en ce que** la branche de maintien (13) du support d'absorbeur (7) entoure le bord de la tôle d'absorbeur (5a) en forme de U.
